# EUROPÄISCHE PATENTSCHRIFT

(11) **EP 1 608 988 B1**
(45) Veröffentlichungstag und Bekanntmachung des Hinweises auf die Patenterteilung: **26.09.2007**
(21) Anmeldenummer: 03816502.3
(22) Anmeldetag: 01.04.2003
(51) Int. Cl.: G01P 15/10

(54) **BESCHLEUNIGUNGSSENSOR UND VERFAHREN ZUM ERFASSEN EINER BESCHLEUNIGUNG**
ACCELERATION SENSOR AND METHOD FOR DETECTING AN ACCELERATION
CAPTEUR D'ACCELERATION ET PROCEDE DE DETECTION D'UNE ACCELERATION

(43) Veröffentlichungstag der Anmeldung: 28.12.2005
(73) Patentinhaber: Fraunhofer-Gesellschaft zur Förderung der angewandten Forschung e.V., 80686 München (DE)
(72) Erfinder: DRABE, Christian, 01099 Dresden (DE); SCHENK, Harald, 01139 Dresden (DE)
(74) Vertreter: Schoppe, Fritz
(86) Internationale Anmeldenummer: PCT/EP2003/003400
(87) Internationale Veröffentlichungsnummer: WO 2004/088329

(56) Entgegenhaltungen:
- WO-A-00/75676
- DE-A- 2 916 103
- GB-A- 2 186 085
- US-A- 2 928 668
- US-A- 3 319 472
- US-A- 4 345 482
- US-A- 4 750 364

## Beschreibung

Diese Erfindung bezieht sich auf einen Beschleunigungssensor zum Erfassen einer Beschleunigung eines Systems, wobei der Beschleunigungssensor mit beschleunigt wird, und auf ein Verfahren zum Erfassen einer Beschleunigung.

Zum Erfassen einer Beschleunigung eines bewegten Systems können Sensoren (Beschleunigungssensoren) eingesetzt werden, die in dem bewegten System integriert sind. Dabei werden die Beschleunigungssensoren mit beschleunigt, so daß zum Erfassen der Beschleunigung üblicherweise keine äußeren Fixpunkte herangezogen werden können. Ein Kernstück eines jeden Beschleunigungssensor ist daher ein Element, das aufgrund der externen Beschleunigung eine seiner physikalischen Eigenschaften ändert. Weist der Beschleunigungssensor beispielsweise ein Feder-Masse-System auf, so kann beispielsweise eine Lage der über die Feder aufgehängten Masse in einem Bezug auf einen festen Punkt des Sensors zur Beschleunigungsbestimmung herangezogen werden. Daneben gibt es auch eine Möglichkeit, eine Änderung von elektrischen, magnetischen oder auch optischen Eigenschaften eines in dem Beschleunigungssensor enthaltenen Elements bei Anliegen einer externen Beschleunigung zu deren Bestimmung zu nutzen.

Bekannte technische Lösungen, welche auf einer Verwendung eines mikromechanisch gefertigten Feder-Masse-Systems beruhen, basieren zum einen auf einer Detektion einer Auslenkung einer Masse, welche durch eine mechanische Rückstellkraft der Feder bei einer nichtvorliegenden externen Beschleunigung in einer Ruhelage verharrt, wie es in der Schrift von S. Bütefisch u. a.: "Three Axis Monolithic Silicon Low-g Accelerometer", J. Micromech. Systems, Bd. 9, Nr. 4 (2000), Seiten 551 - 556, beschrieben ist. Bei anliegender Beschleunigung wird die Masse in eine Position ausgelenkt, welche durch ein Kräftegleichgewicht zwischen Federrückstellkraft und beschleunigender Kraft gegeben ist. Die Beschleunigung wird basierend auf der Auslenkung bestimmt.

Daneben existieren Lösungen, bei denen die beschleunigende Kraft beispielsweise durch eine elektrostatische Kraft so kompensiert wird, daß sich die Masse im wesentlichen in ihrer Ruheposition befindet, wie es in der Schrift von N. Yazdi u. a.: "An All-Silicon Single-Wafer Micro-g Accelerometer with a combined Surface and Bulk Micromachining Process", J. Micromech. Systems, Bd. 9, Nr. 4 (2000), Seiten 544 - 550, sowie in der US-Patentschrift 5,540,095 von Sherman u. a.: "Monolithic Accelerometer" beschrieben ist. In diesem Fall stellt die notwendige Kompensationskraft ein Maß für die anliegende externe Beschleunigung dar.

In beiden Fällen wird üblicherweise die durch eine externe Beschleunigung hervorgerufene Auslenkung einer federnd gelagerten seismischen Masse derart bestimmt, daß eine mit der Auslenkung verbundene Kapazitätsänderung über eine Differentialkondensatoreinrichtung bestimmt bzw. durch elektrostatische Kräfte auf Null gehalten wird.

Nachteilig an den obenstehend beschriebenen Ansätzen ist jedoch, daß sie anfällig gegenüber Temperaturschwankungen sowie einem möglichen Driften der Verstärkerelemente sind. Eine Ausleseschaltung muß deswegen so geschaltet werden, daß solche parasitären Effekte intern kompensiert werden. Dies führt zu einer Erhöhung der Komplexität der Ausleseschaltung sowie zu möglichen Meßungenauigkeiten, die insbesondere bei einem Einsatz der Beschleunigungssensoren im Bereich der Kraftfahrzeugsicherheitstechnik verheerende Folgen haben können. Werden derartig aufgebaute Beschleunigungssensoren beispielsweise zur Fahrzeugstabilisierung, Neigungsmessung oder auch als Airbag- bzw. Aufprallsensoren eingesetzt, so führen etwaige Meßungenauigkeiten sowie die mit der Komplexität der Ausleseschaltung stets mit verbundene Mehrzahl von Fehlerquellen beispielsweise zu einem Fahrzeugfehlverhalten bei Gefahrensituationen oder auch zu einer Nichtauslösung der Airbags.

Die US-A-4,750,364 beschreibt einen Winkelgeschwindigkeits-und Beschleunigungssensor, bei dem die Zungen eines Stimmgabeloszillators in Vibration versetzt werden. Die Winkelgeschwindigkeit und die Beschleunigung werden auf der Basis einer Verschiebung der vibrierenden Zungen hinsichtlich einer Vibrationsachse erfasst.

Die WO 0075676 A1 zeigt eine Vorrichtung und ein Verfahren zur Bestimmung von Frequenz und Amplitude einer schwingenden Struktur. Die Vorrichtung umfasst ein bewegliches Element, das zu einer Schwingung angeregt wird, sowie ein paar von Positionssensoren zur Bestimmung der Auslenkung des beweglichen Elements. Die Positionssensoren sind derart angeordnet, dass sich ihre Messwerte während einer Halbwelle der Schwingung gegenseitig über- und/oder unterschreiten. Zum Vergleich der Messwerte beider Positionssensoren wird eine Schaltung eingesetzt, die aus den Messwerten einen Schwellwert für die Halbwelle der Schwingung bestimmt. Ferner wird eine Einrichtung zur Bestimmung der Zeitdauer, in welcher der Messwert einer der beiden Positionssensoren den Schwellwert überschreitet und/oder unterschreitet, eingesetzt.

Die US-A-3,319,472 beschreibt einen Beschleunigungsmesser, bei dem eine Stimmgabel eingesetzt wird. Die Beschleunigung wird auf der Basis einer ansteigenden Frequenz der Stimmgabel erfasst.

Die Aufgabe der vorliegenden Erfindung besteht darin, ein einfaches Konzept zum genauen Bestimmen einer Beschleunigung zu schaffen.

Diese Aufgabe wird durch einen Beschleunigungssensor gemäß Anspruch 1 sowie durch ein Verfahren zum Erfassen einer Beschleunigung gemäß Anspruch 6 gelöst.

Die vorliegende Erfindung schafft einen Beschleunigungssensor mit einer Masse, die in eine erste Richtung und in eine der ersten Richtung entgegengesetzte zweite Richtung auslenkbar ist, einer Treibereinrichtung, die wirksam ist, um die Masse in eine Schwingung zu versetzen, einer Erfassungseinrichtung zum Erfassen von Zeitpunkten, zu denen die Masse eine vorbestimmte Lage passiert, und einer Auswerteeinrichtung, die basierend auf den erfassten Zeitpunkten bei Beschleunigung und auf Zeitpunkten, zu denen die Masse bei Nicht-Vorliegen einer Beschleunigung die vorbestimmte Lage passiert, die Beschleunigung erfaßt.

Die vorliegende Erfindung schafft ferner ein Verfahren zum Erfassen einer Beschleunigung auf der Basis einer schwingenden Masse mit folgenden Schritten: Versetzen der Masse in eine Schwingung, Erfassen von Zeitpunkten, zu denen die Masse eine vorbestimmte Lage passiert und Erfassen der Beschleunigung basierend auf den erfaßten Zeitpunkten bei Beschleunigung und Zeitpunkten, zu denen die Masse bei Nicht-Vorliegen einer Beschleunigung die vorbestimmte Lage passiert.

Der vorliegenden Erfindung liegt die Erkenntnis zugrunde, daß eine Beschleunigung auf der Basis einer schwingenden Masse genau bestimmt werden kann. Wird die Masse in eine Schwingung versetzt, wobei die Schwingung eine Frequenz sowie eine Phase bezüglich einer Lage (eines festen Punktes innerhalb des Systems) aufweist, so ändert sich die Schwingung nicht, wenn auf die Masse keine zusätzliche beschleunigende Kraft einwirkt. Bei einer Beschleunigung hingegen wird die Masse einer externen Kraft ausgesetzt. In diesem Fall kann die Masse bevorzugt detektiert werden, wenn sie eine vorbestimmte Lage passiert. Bei der vorbestimmten Lage kann es sich beispielsweise um eine Ruhelage handeln, in der die Masse ohne Einwirkung einer äußeren Kraft verharrt. Wird die Masse nicht beschleunigt, so ändert sich die Schwingung nicht, so daß die Masse die vorbestimmte Lage zu bestimmten Zeitpunkten passiert. Wirkt auf die Masse eine beschleunigende Kraft, so unterscheiden sich die Zeitpunkte, zu denen die Masse die vorbestimmte Lage passiert, von den Zeitpunkten, zu denen die Masse bei Nicht-Vorliegen einer Beschleunigung passiert. Zum Bestimmen der Beschleunigung kann daher eine Zeitdifferenz zwischen den Zeitpunkten, die durch die Detektion der Masse während des Passierens der vorbestimmten Lage während der Schwingung bei Nicht-Vorliegen einer Beschleunigung ermittelt werden können, und den Zeitpunkten, die durch Detektieren der Masse beim Passieren der vorbestimmten Lage bei Vorliegen der Beschleunigung ermittelt werden können, bestimmt werden.

Ein Vorteil der vorliegenden Erfindung ist darin zu sehen, daß eine Messung einer Beschleunigung genau durchgeführt werden kann, da erfindungsgemäß eine schwingende Masse eingesetzt wird, deren Schwingung bei Nicht-Vorliegen einer Beschleunigung als Referenz herangezogen wird. Die Beschleunigung wird daher auf der Basis einer Schwingungsveränderung durchgeführt, so daß beispielsweise eine vorherige genaue Kalibrierung des Beschleunigungssensors nicht notwendig ist.

Ein weiterer Vorteil der vorliegenden Erfindung ist darin zu sehen, daß die Ausleseschaltung vereinfacht werden kann, da der erfindungsgemäße Beschleunigungssensor beispielsweise durch Temperaturschwankungen und Driften der Verstärkerelemente nicht beeinflußt wird, da zur Bestimmung der Beschleunigung keine absolute, sondern als relative Größe die Änderung von Zeitpunkten, zu denen die Masse die vorbestimmte Lage passiert, herangezogen wird.

Ein weiterer Vorteil der vorliegenden Erfindung liegt darin, daß der Beschleunigungssensor gleichzeitig eine Beschleunigung sowie eine Beschleunigungsrichtung erfassen kann, da die Beschleunigungsrichtung beispielsweise aus einer Auslenkung der Masse in eine Richtung, in die ein Vektor der beschleunigenden Kraft zeigt, ermittelt werden kann.

Ein weiterer Vorteil der vorliegenden Erfindung ist darin zu sehen, daß aufgrund der schwingenden Masse eine Vielzahl von Verfahren zum Bestimmen der Beschleunigung eingesetzt werden kann, wie beispielsweise kapazitive Wegeaufnehmer, so daß zum Herstellen des erfindungsgemäßen Beschleunigungssensors eine Vielzahl von Technologien zur Verfügung stehen, die einen Herstellungsprozeß flexibilisieren.

Ein weiterer Vorteil der vorliegenden Erfindung liegt darin, daß der erfindungsgemäße Beschleunigungssensor einfach aufgebaut ist, wodurch eine Anzahl von möglichen Fehlerquellen reduziert wird, so daß der erfindungsgemäße Beschleunigungssensor robust, zuverlässig und genau arbeitet.

Bevorzugte Ausführungsbeispiele der vorliegenden Erfindung werden nachfolgend Bezug nehmend auf die beiliegenden Zeichnungen näher läutert. Es zeigen:
- Fig. 1: ein erstes Ausführungsbeispiel eines Beschleunigungssensors gemäß der vorliegenden Erfindung;
- Fig. 2: ein weiteres Ausführungsbeispiel eines Beschleunigungssensors gemäß der vorliegenden Erfindung;
- Fig. 3: einen Querschnitt von dem in Fig. 2 dargestellten Beschleunigungssensor;
- Fig. 4: ein Signal, das eine Schwingung bei NichtVorliegen einer Beschleunigung repräsentiert;
- Fig. 5: ein Signal, das eine Schwingung bei Vorliegen einer Beschleunigung repräsentiert;
- Fig. 6: ein weiteres Ausführungsbeispiel eines Beschleunigungssensors gemäß der vorliegenden Erfindung;
- Fig. 7: ein weiteres Ausführungsbeispiel eines Beschleunigungssensors gemäß der vorliegenden Erfindung; und
- Fig. 8: ein Ausführungsbeispiel eines Verfahrens zum Bestimmen einer Beschleunigung.

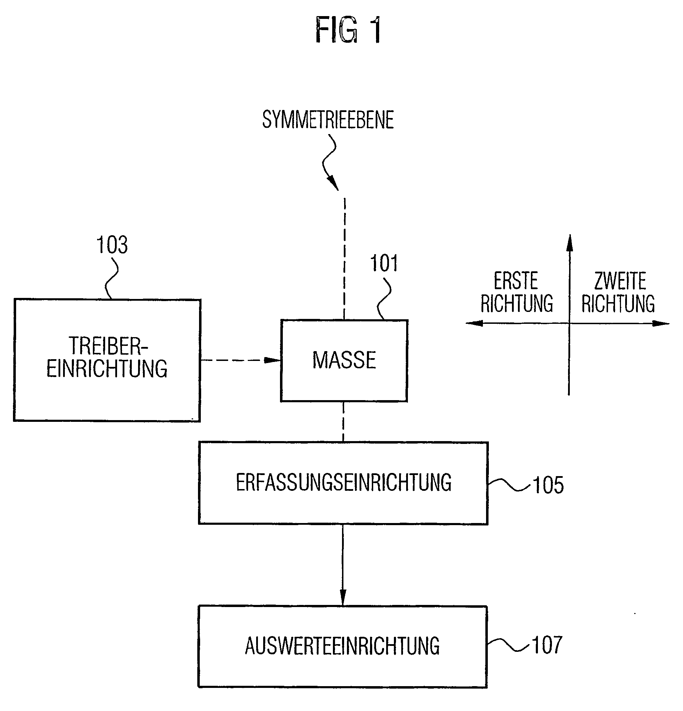

Fig. 1 zeigt ein erstes Ausführungsbeispiel eines Beschleunigungssensors gemäß der vorliegenden Erfindung. Der Beschleunigungssensor weist eine Masse 101 auf, die in eine erste und in eine zweite Richtung auslenkbar ist, wobei beide Richtungen in einem rechts neben der Masse eingezeichneten Koordinatensystem verdeutlicht sind. Der in Fig. 1 dargestellte Beschleunigungssensor weist ferner eine Treibereinrichtung 103 auf, die auf die Masse 101 eine veränderliche Kraft ausübt, wie es durch den gestrichelt eingezeichneten Pfeil verdeutlicht ist. Der Beschleunigungssensor weist eine Erfassungseinrichtung 105 auf, die ein Ausgangssignal liefern kann, das von der Auswerteeinrichtung 107 empfangbar ist.

Im folgenden wird die Funktionsweise des in Fig. 1 dargestellten Beschleunigungssensors erläutert.

Falls auf die Masse 101 keine Kraft einwirkt, d. h. wenn auf die Masse 101 weder eine beschleunigende Kraft noch die von der Treibereinrichtung erzeugte veränderliche Kraft einwirkt, so verharrt die Masse in einer Ruhelage, die in dem in Fig. 1 dargestellten Ausführungsbeispiel als vertikale gestrichelte Symmetrieebene angedeutet ist. Diese Ruhelage bzw. dieser Fixpunkt ist zugleich ein Bezugspunkt bei der nachfolgenden Bestimmung der Beschleunigung. Ist hingegen die Treibereinrichtung wirksam und ist der Beschleunigungssensor keiner Beschleunigungskraft ausgesetzt, so wird die Masse 101 aufgrund der veränderlichen Kraft in Abhängigkeit von einer Kraftveränderung in Bewegung gesetzt. Treibt die Treibereinrichtung 103 die Masse 101 mit einer periodischen Kraft an, so ist die Bewegung der Masse 101 periodisch, so daß sie mit einer Schwingung, deren Amplitude, Phase und Frequenz stabil sind bzw. konstant gehalten werden können, um die Symmetrieebene schwingt. Dabei ist eine Auslenkungsrichtung der Masse 101 abhängig davon, in welche Richtung ein Vektor der periodischen Kraft momentan zeigt.

Ist die periodische Kraft beispielsweise sinusförmig, so passiert die Masse 101 die Symmetrieebene jeweils dann, wenn der Kraftvektor seine Richtung ändert. In anderen Worten ausgedrückt, schwingt in diesem Falle die Masse 101 um die Symmetrieebene herum, so daß ihre Auslenkung in die erste Richtung und in die zweite Richtung eine identische Amplitude sowie eine identische Zeitdauer aufweisen, so dass die Zeitpunkte, zu denen die Masse 101 die vorbestimmte Lage passiert identisch sind. Da die Masse 101 um die Symmetrieebene (Ruhelage) symmetrisch schwingt, kann bevorzugt die Zeitdauer der jeweiligen Auslenkung um die Symmetrieebene als Referenz herangezogen werden.

Bevorzugt kann die Erfassungseinrichtung 105 ausgebildet sein, um die Zeitpunkte zu detektieren, zu denen die Masse bei Vorliegen der Beschleunigung eine vorbestimmte Lage, die in dem in Fig. 1 dargestellten Ausführungsbeispiel die Symmetrieebene ist, passiert, so daß die Auswerteeinrichtung 107 nun eine Zeitdifferenz zwischen den detektierten Zeitpunkten bei Vorliegen der Beschleunigung und Zeitpunkten, zu denen die Masse bei Nicht-Vorliegen einer Beschleunigung die vorbestimmte Lage passiert, bestimmt, so daß basierend auf der Zeitdifferenz die Beschleunigung erfaßt wird.

Bevorzugt wird die Masse 101 von der Erfassungseinrichtung kapazitiv erfaßt. In diesem Fall kann die Masse 101 beispielsweise eine Kapazität eines Kondensators, der mit der Masse 101 verbunden ist, während der Bewegung beeinflussen, so daß aufgrund einer Kapazitätsänderung nun die Schwingung bei Vorliegen einer Beschleunigung erfaßt werden kann. Erfindungsgemäß kann die Erfassungseinrichtung jedoch ebenfalls induktiv arbeiten, wobei in diesem Fall die Masse 101 sich beispielsweise in einem magnetischen Feld befindet. Darüber hinaus ist kann die Erfassungseinrichtung piezoelektrisch, piezoresistiv, magnetostriktiv (piezomagnetisch) oder auch optisch arbeiten.

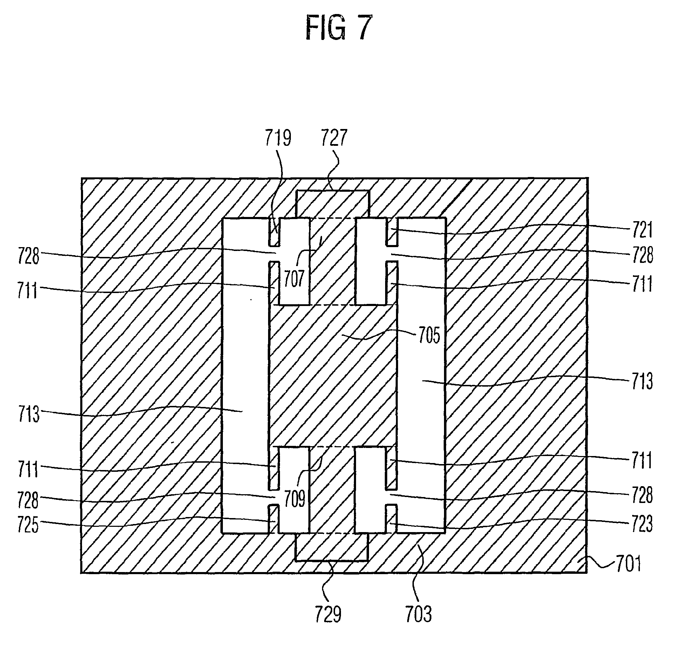

Erfindungsgemäß ist die Erfassungseinrichtung 105 ferner ausgebildet, um eine Auslenkung der Masse in eine weitere Richtung, die sich von der ersten und der zweiten Richtung unterscheidet, zu erfassen. In diesem Fall kann die Auswerteeinrichtung 107 basierend auf der Auslenkung der Masse 101 auch eine Beschleunigungsrichtung erfassen. Erfindungsgemäß können somit zwei Größen, Beschleunigung sowie Beschleunigungsrichtung, gleichzeitig gemessen werden. Eine detaillierte Beschreibung des erfindungsgemäßen Prinzips zum Bestimmen der Beschleunigungsrichtung wird insbesondere anhand des in Fig. 7 dargestellten Ausführungsbeispiels detailliert erläutert.

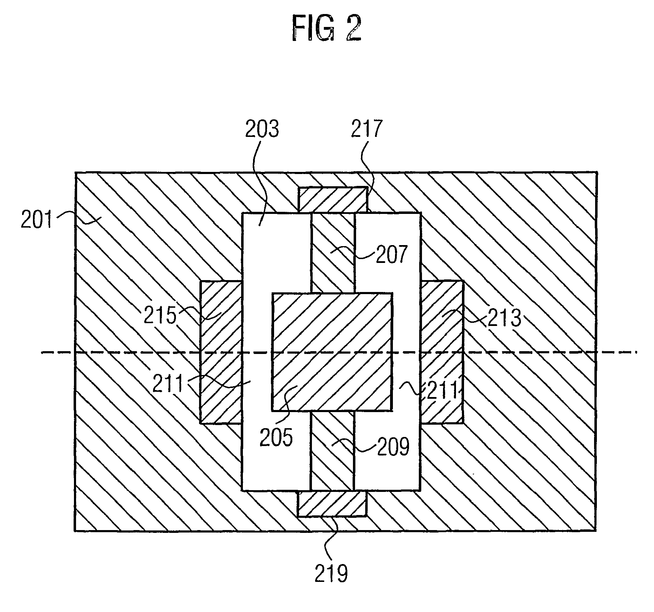

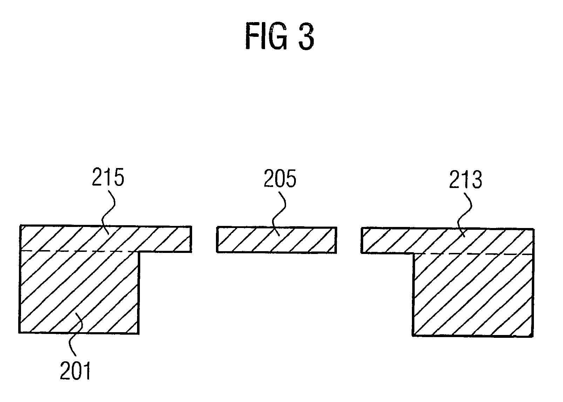

Fig. 2 zeigt ein weiteres Ausführungsbeispiel eines Beschleunigungssensors gemäß der vorliegenden Erfindung. Der Beschleunigungssensor umfaßt z.B eine viereckige Halterung 201, die in der Mitte eine Aussparung 203 aufweist. Grundsätzlich kann die Halterung eine beliebige Form haben. In der Aussparung 203 ist eine Masse 205 angeordnet und über eine erste Feder 207 und eine zweite Feder 209 mit der Halterung 201 gekoppelt. Dabei ist die Masse 205 hier mit einem ersten Ende der ersten Feder 207 und mit einem ersten Ende der zweiten Feder 209 gekoppelt. Ein zweites Ende der ersten Feder 207 und ein zweites Ende der Feder 209 sind jeweils über eine entkoppelnde Isolationsschicht 217 und 219 mit der Halterung 201 verbunden. Dabei sind die beiden Federn 207 und 209 derart angeordnet, daß ihre Rückstellkraftvektoren parallel sind. Durch die Anordnung der Masse 205 ist diese somit in der Aussparung frei auslenkbar. Die Aussparung 203 weist seitlich zwischen der Masse und der Halterung jeweils einen Elektrodenabstand 211 auf, so daß die Masse 205 die Halterung nicht berührt. Der Beschleunigungssensor weist ferner eine erste Ausleseelektrode 213 und eine zweite Ausleseelektrode 215 auf, wobei beide Ausleseelektroden seitlich an die Aussparung angrenzen und derart angeordnet sind, daß die Masse 205 sich dazwischen befindet. Die gestrichelte waagerechte Linie markiert ferner eine Schnittebene, auf die in Fig. 3 eingegangen wird.

Im folgenden wird die Funktionsweise des in Fig. 2 dargestellten Ausführungsbeispiels detailliert beschrieben. Dabei sind die Zeichnungen zur besseren Verständlichkeit nicht maßstabsgerecht ausgeführt.

Die über Federn aufgehängte Masse 205 wird von einer Treibereinrichtung, die in Fig. 2 aus Übersichtlichkeitsgründen nicht eingezeichnet ist, in eine kontinuierliche translatorische Schwingung (senkrecht zur Zeichenebene) versetzt, wobei ein Passieren einer vorbestimmten Lage elektronisch ausgelesen wird. Bei der vorbestimmten Lage kann es sich beispielsweise um eine Ruhelage der Masse 205 handeln. Unter Ruhelage wird eine Lage der Masse 205 bezüglich eines fixen Punktes des Sensors bei nichtanliegender Beschleunigung sowie bei nichtaktiver Treibereinrichtung verstanden. Wird die Masse von der Treibereinrichtung in eine Schwingung versetzt, so ist eine Zeit t1, welche die Masse bei nichtanliegender externer Beschleunigung benötigt, um von einer Ruhelage aus zu einem ersten Umkehrpunkt der Schwingung und wieder zurück zur Ruhelage zu gelangen, und eine Zeit t2, welche die Masse 205 benötigt, um von ihrer Ruhelage aus zu ihrem zweiten Umkehrpunkt der Schwingung und wieder zurück zur Ruhelage zu gelangen, identisch. Das Passieren der Ruhelage wird elektronisch von der ersten Ausleseelektrode 213 und von der zweiten Ausleseelektrode 215 ausgelesen. Bei jedem Passieren der Ruhelage wird beispielsweise ein Spannungspuls generiert, wobei ein zeitlicher Verlauf dieser Pulse im folgenden mit dem Begriff "Ruhesignal" bezeichnet wird. Im Beispiel der Spannungspulse besteht das Ruhesignal bei nichtanliegender externer Beschleunigung aus äquidistanten Pulsen mit dem Abstand t1 = t2 für einen Fall hinreichend schmaler Pulse.

Liegt eine externe Beschleunigung in Richtung der Schwingung der Masse 205 an, so verschiebt sich die Symmetrielage der Schwingung in bezug auf den fixen Punkt. Die Zeiten t1 und t2 werden damit unterschiedlich, so daß das Ruhesignal nicht mehr aus äquidistant verteilten Pulsen besteht. Aus der Differenz t1 - t2 kann somit auf die Beschleunigung geschlossen werden. Um einen Einfluß von Driften einer Schwingungsfrequenz der Schwingung der Masse 205 bei einer Bestimmung der Beschleunigung zu vermeiden, kann bevorzugt zur Beschleunigungsbestimmung eine relative Änderung (t1 - t2) / (t1 + t2) verwendet werden.

Bei der in Fig. 2 schematisch dargestellten Aufsicht eines Feder-Masse-Systems mit Halterung 201 können alle Elemente beispielsweise aus leitendem Material, z. B. hochdotiertem Silizium, gefertigt sein. Die Masse 205 ist, wie es bereits erwähnt worden ist, über zwei Federn 207 und 209 aufgehängt, wobei durch die geeignete Isolationsstruktur 217 und 219 das Feder-Masse-System elektrisch von der Halterung 201 isoliert ist. Darüber hinaus ist die Masse 205 auch durch den Elektrodenabstand 211 von den Ausleseelektroden 213 und 215 getrennt, so daß sie in der Aussparung 203 frei schwingen kann.

Aufgrund der Anordnung der ersten und der zweiten Feder 207 und 209 sind die jeweiligen Federrückstellkräfte parallel. Die Masse 205 ist ferner derart zwischen den beiden Federn angeordnet, daß sie, wie es bereits erwähnt worden ist, senkrecht zur Zeichnungsebene in eine Schwingung versetzt wird. Wird die Masse 205 einer Beschleunigungskraft ausgesetzt, die ebenfalls senkrecht zur Zeichenebene ist, so können die Elektroden 213 und 215, wie es bereits erwähnt worden ist, die Zeitpunkte detektieren, zu denen die Masse bei Vorliegen einer Beschleunigung die vorbestimmte Lage, die nicht notwendigerweise die Ruhelage sein muß, sondern auch eine andere Lage sein kann, erfassen. Eine in Fig. 2 aus Übersichtlichkeitsgründen nicht eingezeichnete Auswerteeinrichtung kann daher, wie es bereits im Zusammenhang mit dem in Fig. 1 dargestellten Ausführungsbeispiel diskutiert worden ist, die Beschleunigung bestimmen.

Fig. 3 zeigt eine Querschnittsdarstellung des in Fig. 2 dargestellten Ausführungsbeispiels entlang der gestrichelten Linie. Anhand von Fig. 3 wird deutlich, daß die Masse bei einer Schwingung an den Ausleseelektroden 213 und 215 vorbeischwingt. Ist die Masse keiner Beschleunigungskraft ausgesetzt, so ist eine Auslenkung der Masse 205. in eine erste Richtung, beispielsweise nach oben, und in eine zweite Richtung, beispielsweise nach unten, identisch. Während der Schwingung der Masse bei Nicht-Vorliegen einer Beschleunigung ändert sich daher eine Kapazität, welche durch die Masse 205 sowie durch die Ausleseelektroden 213 und 215 gebildet wird, periodisch, und zwar derart, daß ein Kapazitätsmaximum auftritt, wenn die Masse die Ruhelage passiert, d.h. wenn die Masse an den Ausleseelektroden 215 und 213 vorbeischwingt. Bei externer Beschleunigung wird die Masse in beide Richtungen unterschiedlich ausgelenkt, so daß die Kapazitätsmaxima nicht mehr äquidistant verteilt sind, da die Masse nicht mehr symmetrisch um die Ruhelage schwingt.

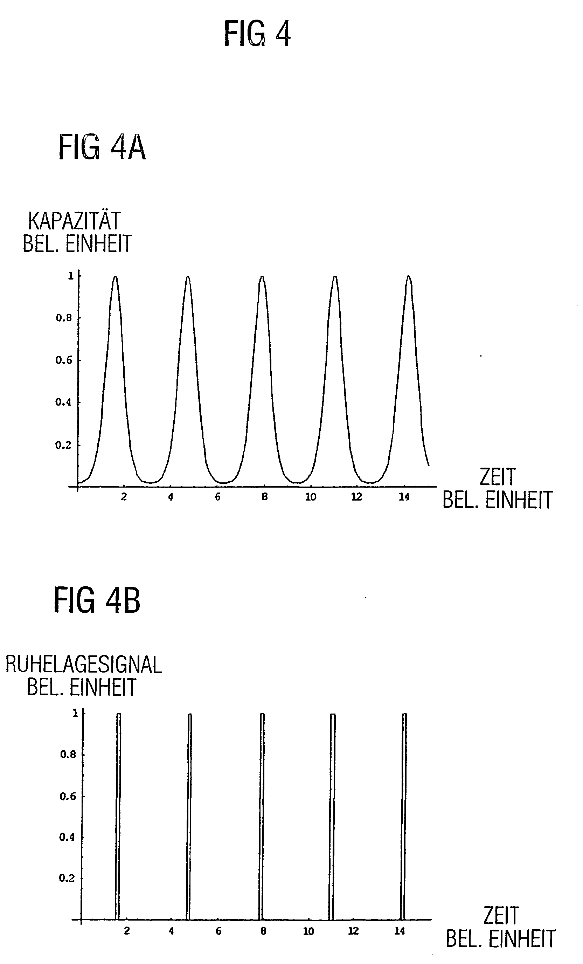

Fig. 4A und 4B zeigen ein Kapazitätssignal sowie ein dazugehöriges Ruhelagesignal bei nichtanliegender externer Beschleunigung.

In Fig. 4A ist schematisch eine Auswertung eines Signals während der Schwingung bei Nicht-Vorliegen einer Beschleunigung dargestellt. Die Ordinate weist dabei jeweils eine Kapazitätsskalierung bezüglich einer beliebigen Einheit auf, auf der Abszisse ist hingegen die Zeit bezüglich einer beliebigen Einheit aufgetragen. Wie es in Fig. 4A deutlich zu erkennen ist, treten bei Nicht-Vorliegen einer Beschleunigung Kapazitätsmaxima auf, die periodisch sind und darüber hinaus äquidistant verteilt sind.

In Fig. 4B ist ein zeitlicher Verlauf eines Ruhesignals dargestellt. Dabei handelt es sich um beispielsweise schmale Spannungspulse, die dann generiert werden, wenn das in Fig. 4A dargestellte Kapazitätssignal ein Maximum erreicht. Auch das Ruhesignal ist periodisch und äquidistant verteilt, da es das Kapazitätssignal aus Fig. 4A charakterisiert. Aus einer zeitlichen Abfolge der in Fig. 4B dargestellten Spannungspulse kann eine Ausleseelektronik, die in einer Auswerteeinrichtung untergebracht ist, die Beschleunigung berechnen. Sind die in Fig. 4B dargestellten Spannungspulse periodisch und äquidistant verteilt, so liefert dies einen Hinweis darauf, daß auf die Masse keine externe Beschleunigung einwirkt.

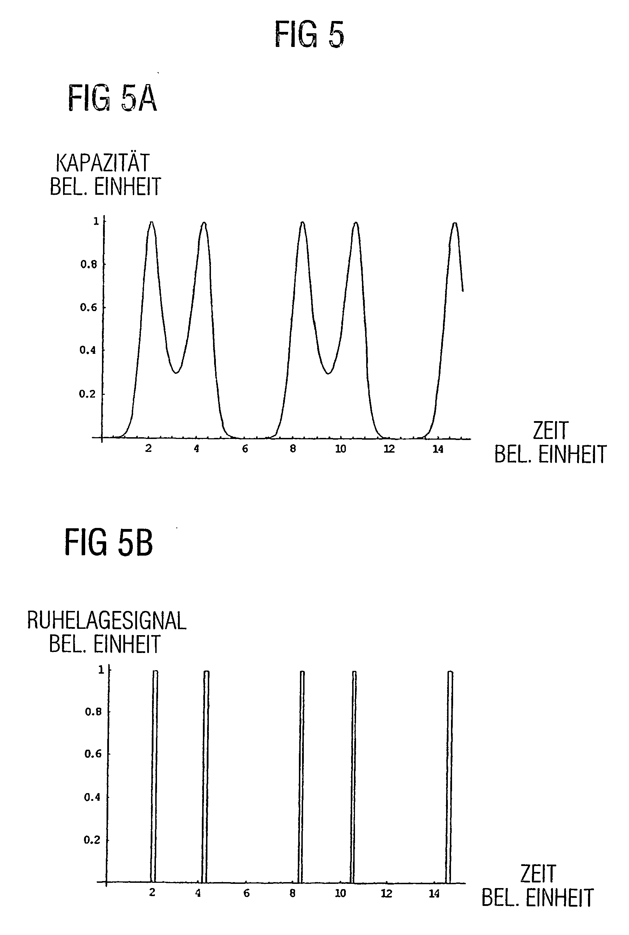

Ist eine externe Beschleunigung anliegend, so ergeben sich die in Fig. 5 beispielhaft dargestellten Signalverläufe.

Fig. 5A zeigt einen zeitlichen Verlauf des Kapazitätssignals, wenn auf die Masse eine externe Beschleunigung einwirkt. Es ist deutlich zu erkennen, daß die Kapazitätsmaxima nicht mehr äquidistant verteilt sind. Dies kommt dadurch zustande, daß bei externer Beschleunigung die Masse 205, wie sie in Fig. 3 gezeichnet ist, von der hier als konstant angenommenen Beschleunigungskraft beeinflußt wird, so daß sie beispielsweise bezüglich der Ruhelage nach unten ausgelenkt ist. Bei der sich so ergebenden Schwingung bei Vorliegen einer Beschleunigung passiert die Masse 205 die beiden Ausleseelektroden 213 und 215 nicht mehr zu äquidistanten Zeitpunkten, so daß sich der in Fig. 5A dargestellte Verlauf ergibt.

In Fig. 5B ist das dazugehörige Ruhesignal dargestellt. Dabei handelt es sich um Spannungspulse, die dann generiert werden, wenn die Masse 205 die Ausleseelektroden 215 und 213 passiert, was gleichbedeutend mit einem zeitlichen Auftreten der Kapazitätsmaxima ist. Es ist deutlich zu erkennen, daß die Spannungspulse nicht mehr äquidistant verteilt sind, so daß beispielsweise ein zeitlicher Abstand zwischen dem zweiten und dem ersten Spannungspuls geringer ist als ein zeitlicher Abstand zwischen dem zweiten und dem dritten Spannungspuls. Aus der sich so ergebenden Zeitdifferenz, insbesondere in bezug auf die in Fig. 4 dargestellten Signalverläufe, kann die Beschleunigung von einer Auswerteeinrichtung erfaßt werden.

An dieser Stelle sei darauf hingewiesen, daß sowohl die in Fig. 4 als auch die in Fig. 5 dargestellten Signalverläufe periodisch mit einer festen Periode sind. Dies ist darauf zurückzuführen, daß in den vorhergehend diskutierten Ausführungsbeispielen die Beschleunigung stets als konstant angenommen wird, was mit einer konstanten beschleunigenden Kraft gleichsetzbar ist. Der erfindungsgemäße Sensor kann jedoch auch zu einer Bestimmung der momentanen Beschleunigung herangezogen werden, wenn die Beschleunigungskraft nicht konstant ist. In diesem Fall wäre das in Fig. 5B dargestellte Ruhesignal nicht mehr periodisch, sondern aperiodisch. Erfindungsgemäß kann die momentane Beschleunigung jedoch beispielsweise aus einer sich dann ergebenden Zeitdifferenz bezüglich der Kapazitätsmaxima in bezug auf die während der Schwingung auftretenden Kapazitätsmaxima bei Nicht-Vorliegen einer Beschleunigung erfaßt werden.

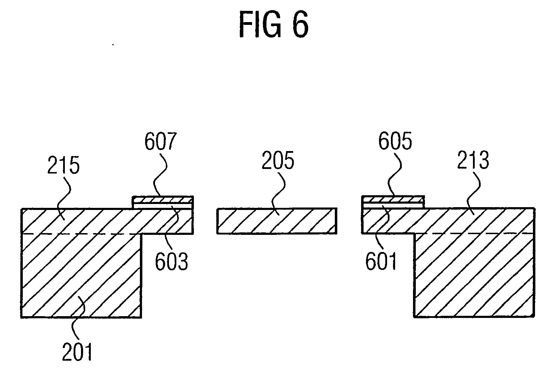

In Fig. 6 ist ein weiteres Ausführungsbeispiel eines erfindungsgemäßen Beschleunigungssensors dargestellt, wobei in der Zeichnung dessen Querschnitt gezeigt ist.

Im Unterschied zu dem in Fig. 2 und 3 dargestellten Ausführungsbeispiel ist auf der ersten Ausleseelektrode 213 eine dritte Ausleseelektrode 601 angeordnet. Auf der zweiten Ausleseelektrode 215 ist ferner eine vierte Ausleseelektrode 603 angeordnet. Auf der dritten Ausleseelektrode 601 ist eine dritte Isolationsschicht 605 derart angeordnet, daß eine Oberfläche der dritten Ausleseelektrode 601 von derselben bedeckt wird. Analog ist auf der vierten Ausleseelektrode 603 eine vierte Isolationsschicht 607 angeordnet, die eine Oberfläche der vierten Ausleseelektrode 603 bedeckt.

Im folgenden wird die Funktionsweise des in Fig. 6 dargestellten Ausführungsbeispiels näher erläutert.

Das in Fig. 6 dargestellte Ausführungsbeispiel entspricht im wesentlichen dem in Fig. 2 bzw. 3 dargestellten Ausführungsbeispiel, wobei der Beschleunigungssensor nun eine zusätzliche Elektrodenstruktur, bestehend aus der dritten und der vierten Ausleseelektrode 601 und 603 aufweist. Die zusätzliche Elektrodenstruktur wird erfindungsgemäß zur Bestimmung der Beschleunigungsrichtung eingesetzt. Dabei können die weiteren Elektroden 601 und 603 separat von den Ausleseelektroden 213 und 215 kontaktiert werden. Durch Bestimmung von beispielsweise einer Kapazität zwischen den Zusatzelektroden 601 und 603 sowie der Masse 205 steht so eine Verschiebung einer Schwingungssymmetrielage zur Verfügung, woraus eine Richtung der Beschleunigung von einer in Fig. 6 nicht eingezeichneten Auswerteeinrichtung ermittelt werden kann. Dazu muß jedoch nicht eine absolute Kapazität zwischen den Zusatzelektroden 601 und 603 sowie der Masse 205 bestimmt werden, sondern beispielsweise ein Zeitpunkt eines Kapazitätsmaximums, das durch die Zusatzelektroden 601 und 603 sowie Masse 205 gebildet wird. Eine in Fig. 6 aus Übersichtlichkeitsgründen nicht eingezeichnete Ausleseeinrichtung kann anhand der Zeitpunkte, wie es bereits diskutiert worden ist, die Beschleunigung erfassen. Die Anordnung der Elektroden 605 und 607 ist lediglich beispielhaft gezeigt. Grundsätzlich können diese Elektroden auch auf andere Weise positioniert sein.

Fig. 7 zeigt ein weiteres Ausführungsbeispiel eines Beschleunigungssensors gemäß der vorliegenden Erfindung.

Der in Fig. 7 dargestellte Beschleunigungssensor weist eine rechteckförmige Halterung 701 auf, in deren Mitte sich eine Aussparung 703 befindet. In der Aussparung 703 ist eine Masse 705 zwischen einer ersten Feder 707 und einer zweiten Feder 709 eingespannt. Die Masse 705 weist einen im wesentlichen rechteckigen Querschnitt auf. Jeweils an den Ecken befinden sich jedoch weitere Bereiche 711, die einen schmalen rechteckigen Querschnitt aufweisen und die Masse 705 an den Ecken jeweils nach oben und nach unten hin erweitern. Jeweils seitlich zwischen der Masse 705 und der Halterung 701 weist der in Fig. 7 dargestellte Beschleunigungssensor einen Elektrodenabstand 713 auf. Die Halterung 701 ist lediglich beispielhaft als recheckförmig beschrieben und kann grundsätzlcih eine beliebige Form haben.

Im Unterschied zu dem in Fig. 2 dargestellten Beschleunigungssensor weist der in Fig. 7 dargestellte Beschleunigungssensor ferner eine dritte Ausleseelektrode 719, eine vierte Ausleseelektrode 721, eine fünfte Ausleseelektrode 723 sowie eine sechste Ausleseelektrode 725 auf. Die Ausleseelektroden 719 - 725 sind jeweils oben und unten in der Halterung 701 angeordnet und erstrecken sich in die Aussparung 703 derart hinein, daß sie jeweils gegenüber dem jeweiligen weiteren Bereich 711 der Masse 705 angeordnet sind. Die Ausleseelektroden 719 - 725 weisen einen schmalen rechteckigen Querschnitt auf, dessen Größenordnung jeweils mit der Größenordnung der Querschnitte der weiteren Bereiche 711 vergleichbar ist. Zwischen der jeweiligen Ausleseelektrode 719 - 725 und dem jeweiligen weiteren Bereich 711 sind weitere Elektrodenabstände 728 angeordnet. Die erste Feder 707 ist mit der Halterung 701 über eine erste Isolationsschicht 727 verbunden, die zweite Feder 709 ist mit der Halterung 701 hingegen über eine zweite Isolationsschicht 729 verbunden.

Im folgenden wird die Funktionsweise des in Fig. 7 dargestellten Beschleunigungssensors näher erläutert.

In dem in Fig. 7 dargestellten Ausführungsbeispiel ist die Masse 705 von einer im Bild aus Übersichtlichkeitsgründen nicht eingezeichneten Treibervorrichtung in eine Schwingung versetzt. In diesem Fall wird jedoch eine Schwingung angeregt, die in Fig. 7 von links nach rechts und umgekehrt verläuft, d. h. die Masse schwingt bei einer nichtanliegenden externen Beschleunigung in der Zeichenebene. Somit passiert der jeweilige weitere Bereich 711 der Masse 705 die jeweilige Ausleseelektrode 719 - 725. Wird beispielsweise zum Bestimmen der Beschleunigung eine Ruhelage der Masse 705, bei der die weiteren Bereiche 711 jeweils an den Ausleseelektroden 719 - 725 gegenüberstehen, als eine vorbestimmte Lage gewählt, so wird die Masse während der Schwingung bei Nicht-Vorliegen einer Beschleunigung symmetrisch um die Ruhelage ausgelenkt. Dabei berührt die Masse 705 bzw. deren weitere Bereiche 711 die jeweiligen Elektroden 719 - 725 nicht, da sich dazwischen jeweils Elektrodenabstände 728 befinden.

Die Masse 705 ist somit durch den jeweiligen Elektrodenabstand 728 von den Ausleseelektroden 719 - 725 getrennt.

Eine Kapazität, welche sich durch die Masse 705 und die Ausleseelektroden 719 - 725 ergibt, ändert sich während der Schwingung der Masse derart, daß ein Kapazitätsmaximum auftritt, wenn die Masse 705 die Ruhelage passiert. Dabei treten die Kapazitätsmaxima bei einer nichtanliegenden externen Beschleunigung stets äquidistant verteilt und periodisch auf, so daß die Bestimmung der Beschleunigung sowie ein Auswerteverfahren analog erfolgen, wie dies bereits im Zusammenhang mit dem in Fig. 5 diskutierten Ausführungsbeispiel der Fall ist.

Während der Beschleunigung schwingt die Masse 705 nicht mehr symmetrisch um die Ruhelage, so daß beispielsweise eine Auslenkung der Masse nach links nicht so stark ist wie eine Auslenkung der Masse nach rechts. Dies ist gleichbedeutend damit, daß die Zeitpunkte, zu denen die Masse 705 die Ruhelage passiert, nicht äquidistant verteilt sind. Hieraus kann eine in Fig. 7 nicht eingezeichnete Auswerteeinrichtung die Beschleunigung bestimmen. Die Auswerteeinrichtung kann dabei bevorzugt ausgebildet sein, um laterale Schwingungen kapazitiv zu erfassen.

Neben der Bestimmung der Beschleunigung kann der in Fig. 7 dargestellte Beschleunigungssensor, ähnlich wie in Fig. 2, auch zu einer Bestimmung einer Beschleunigungsrichtung eingesetzt werden.

Ein Anwendungsgebiet des erfindungsgemäßen Beschleunigungssensors umfaßt somit alle Einsatzbereiche, in denen eine positive oder eine negative Beschleunigung eines Körpers, Objekts oder Sensors selbst mit Hilfe eines Sensors erfaßt wird. Dabei kann es sich um eine pulsförmige Beschleunigung, wie beispielsweise durch einen Aufprall hervorgerufen, um eine oszillierende Beschleunigung, wie beispielsweise durch eine Vibration hervorgerufen, handeln. Des weiteren können Beschleunigungen erfaßt werden, welche aufgrund einer Drehbewegung auftreten.

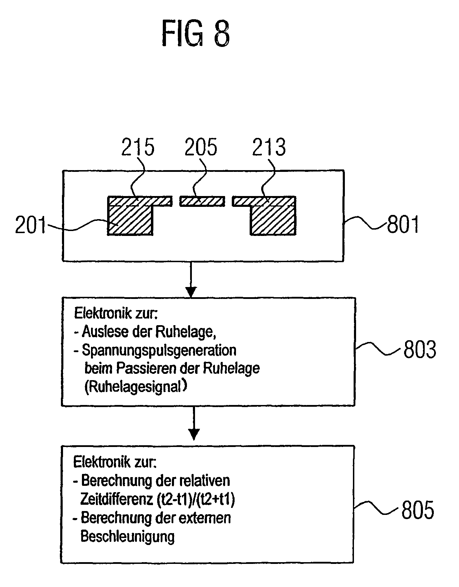

In Fig. 8 ist ein Ausführungsbeispiel eines erfindungsgemäßen Verfahrens zum Bestimmen der Beschleunigung dargestellt, das die Schritte prinzipiell verdeutlicht, die bei der Bestimmung der Beschleunigung durchgeführt werden.

Ausgehend von einem dynamischen System 801, das beispielsweise den in Fig. 3 dargestellten Beschleunigungssensor aufweist, wird eine Schwingung der Masse 205 von einer Erfassungseinrichtung 803 erfaßt. Die Erfassungseinrichtung 803 umfaßt eine Elektronik zur Auslese einer Ruhelage, zur Spannungsimpulsgeneration beim Passieren des Ruhesignals, so daß eine nachgeordnete Auswerteeinrichtung 805 die Berechnung der externen Beschleunigung durchführen kann. Dabei wird beispielsweise eine relative Zeitdifferenz berechnet, die zur Bestimmung der externen Beschleunigung herangezogen wird.

Wie es in Fig. 8 dargestellt ist, werden bei dem erfindungsgemäßen Verfahren bevorzugt die Zeitpunkte detektiert, zu denen die Masse während der Schwingung bei Vorliegen einer Beschleunigung eine vorbestimmte Lage (Ruhelage) passiert, und es wird eine Zeitdifferenz zwischen den erfaßten Zeitpunkten während der Schwingung bei Vorliegen einer Beschleunigung und Zeitpunkten, zu denen die Masse bei Nicht-Vorliegen einer Beschleunigung die vorbestimmte Lage passiert, bestimmt. Basierend auf der Zeitdifferenz kann die Beschleunigung in der Auswerteeinrichtung erfaßt werden.

Bei allen diskutierten Ausführungsbeispielen wurde der Fall betrachtet, daß eine Schwingungsamplitude über eine Pulsbreite des Kapazitätssignals ermittelt werden kann. Beispielsweise kann die Breite des Kapazitätssignals anhand des in Fig. 4A dargestellten Verlaufs bestimmt werden, indem beispielsweise eine geeignete Schwelle vorgegeben wird. Diese bestimmte Breite ist für große Schwingungsamplituden oder hohe Schwellwerte in sehr guter Näherung indirekt proportional zur Schwingungsamplitude. Entweder kann die Schwingungsamplitude mit Hilfe eines Reglers konstantgehalten werden oder diese bestimmte Breite des Kapazitätssignals wird direkt zur Bestimmung der Beschleunigung verwendet.

Gemäß einem weiteren Ausführungsbeispiel beschreibt die erfindungsgemäße Lösung ein System zur kapazitiven Erfassung einer Beschleunigung, das im Vergleich zu herkömmlichen Lösungen mit einer einfachen Ausleseschaltung auskommt und insbesondere durch Temperaturschwankungen oder Driften der Verstärkerelemente, wie es bereits erwähnt worden ist, nicht beeinflußt wird.

Das Passieren der Ruhelage (oder einer Position mit einem festen Abstand zur Ruhelage) kann dabei vorzugsweise durch eine Detektion eines Kapazitätsmaximums erfaßt werden. Alternativ kann das als Spannung vorliegende Kapazitätssignal beispielsweise mit einem festen Referenzwert mit Hilfe eines Komparators verglichen werden, wobei ein Driften einer Referenzspannung oder des Kapazitätssignals nicht in die Bestimmung der Beschleunigung einfließen, solange lediglich die relative Zeitdifferenz (t2 - t1)/(t2 + t1) verwendet wird. Die Zeiten t1 und t2 und alle folgenden Zeiten können beispielsweise durch eine ansteigende Flanke des Pulses festgelegt werden.

Das erfindungsgemäße mikromechanische Bauelement umfaßt gemäß einem weiteren Ausführungsbeispiel ein Feder-Masse-System, wobei die Masse zur Beschleunigungsdetektion in eine Schwingung versetzt wird, eine Vorrichtung zum Auslesen des Passierens der Ruhelage der Masse bzw. eine Position, welche sich in einem festen Abstand zur Ruhelage befindet, wobei die Ruhelage als die Position der Masse verstanden wird, welche die Masse bei einer nichtanliegenden externen Beschleunigung in ihrem Ruhezustand einnimmt, sowie eine Vorrichtung zur Aufrechterhaltung einer konstanten Schwingungsamplitude (Treibereinrichtung) oder zur Auslese eines amplitudenbezogenen Signals.

Die Erfindung betrifft somit ein mikromechanisch gefertigtes Feder-Masse-System und insbesondere eine Ausbildung des durch eine externe Beschleunigung beeinflußten Feder-Masse-Systems, sowie ein Verfahren zur Bestimmung der externen Beschleunigung. Das die Beschleunigung aufnehmende Feder-Masse-System ist dabei bevorzugt so ausgebildet, daß die Bestimmung der Beschleunigung durch eine Ausleseschaltung sehr einfach gehalten werden und außerdem durch Temperaturschwankungen oder durch Drift von elektronischen Verstärkerelementen oder anderen zur Auslese notwendigen elektronischen Bauelementen nicht beeinflußt wird.

Das Anwendungsgebiet des erfindungsgemäßen Beschleunigungssensors umfaßt alle Bereiche, in denen eine positive oder eine negative Beschleunigung eines Körpers, Objekts oder des Sensors selbst mit Hilfe eines Sensors erfaßt wird. Dabei kann es sich um eine pulsförmige Beschleunigung handeln, wie beispielsweise durch einen Aufprall hervorgerufen, oder auch um eine oszillierende Beschleunigung, wie beispielsweise durch eine Vibration hervorgerufen. Des weiteren können bevorzugt Beschleunigungen erfaßt werden, welche aufgrund einer Drehbewegung auftreten.

## Patentansprüche

1. Beschleunigungssensor mit folgenden Merkmalen:
einer Masse (205; 705), die ausgehend von einer Ruhelage in eine erste Richtung und in eine der ersten Richtung entgegengesetzte zweite Richtung auslenkbar ist;
einer Treibereinrichtung (103), die wirksam ist, um die Masse (101; 205; 705) in eine periodische Schwingung um die Ruhelage zu versetzen, wobei die Ruhelage eine Lage der Masse bei nicht-anliegender Beschleunigung und bei nicht-aktiver Treiberschaltung ist;
einer Erfassungseinrichtung (105; 803) zum Erfassen von Zeitpunkten, zu denen die Masse (101; 205; 705) die Ruhelage passiert;
einer Auswerteeinrichtung (108; 805), die ausgebildet ist, um basierend auf einer Zeitdifferenz zwischen aufeinanderfolgenden erfassten Zeitpunkten eine in Richtung der Auslenkung der Masse anliegende Beschleunigung zu erfassen.

2. Beschleunigungssensor gemäß Anspruch 1, bei dem die Erfassungseinrichtung (105; 803) ausgebildet ist, um die Schwingung kapazitiv, induktiv, piezoelektrisch, piezoresistiv, magnetostriktiv oder optisch zu erfassen.

3. Beschleunigungssensor gemäß Anspruch 1 oder 2, bei dem die Masse (101; 205; 705) in eine weitere Richtung, die sich von der ersten und der zweiten Richtung unterscheidet auslenkbar ist, wobei die Erfassungseinrichtung (105; 803) ferner ausgebildet ist, um eine Auslenkung der Masse (101; 205; 705) in die weitere Richtung, zu erfassen;
wobei die Auswerteeinrichtung (107; 805) ausgebildet ist, um basierend auf der Auslenkung der Masse (101; 205; 705) in die weitere Richtung eine Beschleunigung zu erfassen.

4. Beschleunigungssensor gemäß Anspruch 3, bei dem die Auswerteeinrichtung (107; 805) ausgebildet ist, um laterale Schwingungen kapazitiv zu erfassen.

5. Beschleunigungssensor gemäß einem der Ansprüche 1 bis 4, bei dem die Masse (101; 205; 705) mit einer ersten und einer zweiten Feder (207, 209; 707, 709) gekoppelt ist.

6. Verfahren zum Erfassen einer Beschleunigung auf der Basis einer schwingenden Masse, die ausgehend von einer Ruhelage in eine erste Richtung und in eine der ersten Richtung entgegengesetzte zweite Richtung auslenkbar ist, wobei das Verfahren folgende Schritte aufweist:
Versetzen der Masse (101; 205; 705) in eine periodische Schwingung um die Ruhelage, wobei die Ruhelage eine Lage der Masse bei nicht-anliegender Beschleunigung und bei einer nicht-aktiver Treiberschaltung zum Treiben der Masse ist;
Erfassen von Zeitpunkten, zu denen die Masse (101; 205; 705) die Ruhelage passiert;
Erfassen einer in Richtung der Auslenkung der Masse anliegenden Beschleunigung basierend auf einer Zeitdifferenz zwischen aufeinanderfolgenden erfassten Zeitpunkten.

## Claims

1. Acceleration sensor, comprising:
a mass (205; 705), which is deflectable in a first direction and a second direction opposite to the first direction starting from a resting position;
a driving means (103), which is effective to periodically vibrate the mass (101; 205; 705) about the resting position, wherein the resting position is a position of the mass when no acceleration is applied and when no drive circuit is active;
a detection means (105; 803) for detecting times when the mass (101; 205; 705) passes the resting position;
an evaluation means (108; 805), which is formed to detect an acceleration applied in direction of the deflection of the mass based on a time difference between successive detected times.

2. Acceleration sensor according to claim 1, wherein the detection means (105; 803) is formed to detect the vibration capacitively, inductively, piezoelectrically, piezoresistively, magnetorestrictively or optically.

3. Acceleration sensor according to claim 1 or 2, wherein the mass (101; 205; 705) is deflectable in a further direction which differs from the first and second directions, wherein the detection means (105; 803) is further formed to detect a deflection of the mass (101; 205; 705) in the further direction;
wherein the evaluation means (107; 805) is formed to detect an acceleration based on the deflection of the mass (101; 205; 705) in the further direction.

4. Acceleration sensor according to claim 3, wherein the evaluation means (107; 805) is formed to capacitively detect lateral vibrations.

5. Acceleration sensor according to one of claims 1 to 4, wherein the mass (101; 205; 705) is coupled to a first and a second spring (207, 209; 707, 709).

6. Method for detecting an acceleration based on a vibrating mass, which is deflectable in a first direction and a second direction opposite to the first direction starting from a resting position, comprising steps of:
periodically vibrating the mass (101; 205; 705) about the resting position, wherein the resting position is a position of the mass when no acceleration is applied and when a drive circuit for driving the mass is not active;
detecting times when the mass (101; 205; 705) passes the resting position;
detecting an acceleration applied in direction of the deflection of the mass based on a time difference between successive detected times.

## Revendications

1. Capteur d'accélération aux caractéristiques suivantes:
une masse (205; 705) pouvant être déviée, partant d'une position de repos, dans une première direction et dans une deuxième direction opposée à la première direction;
un moyen pilote (103) qui est actif pour déplacer la masse (101; 205; 705) en une oscillation périodique autour de la position de repos, la position de repos étant une position de la masse à accélération non appliquée et à circuit pilote non actif;
un moyen de détection (105; 803) destiné à détecter les moments où la masse (101; 205; 705) passe par la position de repos;
un moyen d'évaluation (108; 805) qui est réalisé de manière à détecter, sur base d'une différence de temps entre des moments détectés successifs, une accélération présente en direction de la déviation de la masse.

2. Capteur d'accélération selon la revendication 1, dans lequel le moyen de détection (105; 803) est réalisé de manière à détecter l'oscillation de manière capacitive, inductive, piézoélectrique, piézorésistive, magnétostrictive ou optique.

3. Capteur d'accélération selon la revendication 1 ou 2, dans lequel la masse (101; 205; 705) peut être déviée dans une autre direction qui diffère de la première et de la deuxième direction, le moyen de détection (105; 803) étant, par ailleurs, réalisé de manière à détecter une déviation de la masse (101; 205; 705) dans l'autre direction;
le moyen d'évaluation (107; 805) étant réalisé de manière à détecter une accélération sur base de la déviation de la masse (101; 205; 705) dans l'autre direction.

4. Capteur d'accélération selon la revendication 3, dans lequel le moyen d'évaluation (107; 805) est réalisé de manière à détecter les oscillations latérales de manière capacitive.

5. Capteur d'accélération selon l'une des revendications 1 à 4, dans lequel la masse (101; 205; 705) est couplée à un premier et un deuxième ressort (207, 209; 707, 709).

6. Procédé pour détecter une accélération sur base d'une masse oscillante qui, partant d'une position de repos, peut être déviée dans une première direction et dans une deuxième direction opposée à la première direction, le procédé présentant les étapes suivantes:
déplacer la masse (101; 205; 705) en une oscillation périodique autour de la position de repos, la position de repos étant une position de la masse à accélération non appliquée et à circuit pilote non actif pour piloter la masse;
détecter les moments auxquels la masse (101; 205; 705) passe par la position de repos;
détecter une accélération présente en direction de la déviation de la masse sur base d'une différence de temps entre des moments détectés successifs.
